# EUROPÄISCHE PATENTSCHRIFT

(11) **EP 3 310 737 B1**
(45) Veröffentlichungstag und Bekanntmachung des Hinweises auf die Patenterteilung: **30.10.2019**
(21) Anmeldenummer: 16732940.8
(22) Anmeldetag: 14.06.2016
(51) Int. Cl.: C04B 28/02, C04B 28/08, C04B 28/18, C04B 7/345, C04B 7/153

(54) **ANREGER MIT NIEDRIGEM PH-WERT FÜR KLINKERERSATZMATERIALIEN**
ACTIVATOR WITH LOW PH VALUE FOR CLINKER REPLACEMENT MATERIALS
ACTIVATEUR À PH FAIBLE POUR MATÉRIAUX DE REMPLACEMENT DE CLINKER

(30) Priorität: 16.06.2015 EP 15001773
(43) Veröffentlichungstag der Anmeldung: 25.04.2018
(73) Patentinhaber: HeidelbergCement AG, 69120 Heidelberg (DE)
(72) Erfinder: BEN HAHA, Mohsen, 69117 Heidelberg (DE); LINK, Tim, 44532 Lünen (DE); BELLMANN, Frank, 99425 Weimar (DE); LUDWIG, Horst-Michael, 99423 Weimar (DE)
(74) Vertreter: Zellentin & Partner mbB Patentanwälte
(86) Internationale Anmeldenummer: PCT/EP2016/000984
(87) Internationale Veröffentlichungsnummer: WO 2016/202449

(56) Entgegenhaltungen:
- EP-A1- 2 676 943
- EP-A1- 2 746 237
- EP-A1- 2 801 557
- EP-A1- 2 878 586
- WO-A2-2013/023732
- T. LINK ET AL: "Reactivity and phase composition of Ca2SiO4 binders made by annealing of alpha-dicalcium silicate hydrate", CEMENT AND CONCRETE RESEARCH., Bd. 67, 1. Januar 2015 (2015-01-01), Seiten 131-137, XP055230064, US ISSN: 0008-8846, DOI: 10.1016/j.cemconres.2014.08.009
- MATKOVIC B ET AL: "The effect of combined additions of silica fume, calcium sulfoaluminate, and gypsum on the hydration and strength development of calcium silicate", ADVANCES IN CEMENT RESEARCH, THOMAS TELFORD LTD, GB, Bd. 4, Nr. 1, 1. Januar 1991 (1991-01-01), Seiten 9-15, XP008170233, ISSN: 0951-7197

## Beschreibung

Die vorliegende Erfindung betrifft die Anregung von Klinkerersatzmaterialien, d.h. latent-hydraulische und/oder puzzolanische Materialien, speziell hydraulische Bindemittel auf Basis von latent-hydraulischen und/oder puzzolanischen Materialien, wie Hüttensand und/oder getemperte Tone / Schiefer, Flugaschen, und reaktivem Belit als Anreger, sowie ein Verfahren zur Anregung von latent-hydraulischen und/oder puzzolanischen Materialien und die Verwendung von reaktivem Belit als Anreger.

Hüttensand ist glasig erstarrte, granulierte Hochofenschlacke. Hochofenschlacke entsteht bei der Roheisenerzeugung im Hochofen dadurch, dass sich die Al₂O₃- und SiO₂- reichen Bestandteile der nichtmetallischen Erzbegleitphasen und der Koksasche beim Schmelzprozess mit dem Kalkzuschlag zu Kalk-Aluminat-Silikaten verbinden. Sie übernimmt damit wichtige metallurgische Aufgaben. Sie befreit das Roheisen vom Schwefel des Kokses, den Ofen von Alkalien und schützt das Roheisen vor der Reoxidation. Die Hochofenschlacke schwimmt auf Grund ihrer geringeren Dichte auf dem Eisen. Durch Optimierung ihrer Zusammensetzung wird der Schmelzpunkt minimiert und durch ihre Dünnflüssigkeit die leichte Trennbarkeit vom flüssigen Eisen sichergestellt. Wird die geschmolzene Hochofenschlacke an der Luft langsam abgekühlt, kristallisiert sie fast vollständig und es entsteht ein stückiges, hartes, hydraulisch inaktives Material. Dieses, als Hochofenstückschlacke bezeichnete Material, verhält sich in fein gemahlenem Zustand gegenüber Wasser praktisch inert. Es wird auf Grund dieser Eigenschaft und seiner Härte z.B. im Straßenbau eingesetzt.

Seit 1862 ist bekannt, dass durch Abschrecken der geschmolzenen Hochofenschlacke mit Wasser ein sandartiges, glasiges Granulat hergestellt werden kann, das latent-hydraulische Eigenschaften besitzt. Bei dieser "Granulierung" wird die Schmelze von ca. 1500°C mit einem bis zu 10-fachen Wasserüberschuss sehr rasch unter die sogenannte Transformationstemperatur von 840°C abgekühlt und zerteilt. Für solche "granulierte" Hochofenschlacken wurde von Beginn des 20. Jahrhunderts an zunehmend der Begriff "Hüttensand" verwendet und 1954 vom Verein Deutscher Eisenhüttenleute als Bezeichnung festgelegt.

Hydraulische Bindemittel können in fein gemahlenem Zustand nach dem Anmachen mit Wasser sowohl an der Luft als auch unter Wasser erhärten. Als hydraulisch werden Materialien bezeichnet, die diese Erhärtung in reinem Zustand zeigen, z.B. Portlandzementklinker. Als latent-hydraulisch werden Materialien dann bezeichnet, wenn sie grundsätzlich über die Fähigkeit verfügen hydraulisch zu erhärten, dazu aber einen oder mehrere Anreger benötigen, wie z.B. Hüttensand und künstliche Gläser (mit einer dem Hüttensand vergleichbaren chem. Zusammensetzung). Die Charakterisierung "latent-hydraulisch" wird verwendet, um die besonderen Eigenschaften der Hüttensande und mit ihnen vergleichbarer Bindemittel zu beschreiben. Sie sagt aus, dass ein bestimmtes Bindemittel dem Portlandzement sowohl in seiner Fähigkeit, hydraulisch zu erhärten als auch in seinem Chemismus nahe steht. Ein latent-hydraulisches Bindemittel enthält demnach sowohl reaktives SiO₂ als auch reaktives CaO in ausreichend hoher Menge, um mit Hilfe eines äußeren Anstoßes (Anreger) mit Wasser unter Bildung von Calciumsilicathydraten hydraulisch zu erhärten.

Im Unterschied dazu sind Puzzolane oder puzzolanische Materialien natürliche oder industriell hergestellte Stoffe, wie z.B. getemperte Tone und Schiefer, Trass, Ziegelmehl, kalkarme (z.B. nach DIN EN 450-1) [V] aber zum Teil auch kalkreiche (>10 Gew.-% CaO, z.B. DIN EN 197-1) [W] Flugaschen, die reaktives SiO₂ alleine oder auch zusammen mit Al₂O₃ und/oder Fe₂O₃ enthalten, aber nicht selbstständig mit Wasser erhärten können. Grundsätzlich, mit Ausnahmen, wie zum Beispiel W Flugaschen, enthalten Puzzolane entweder kein oder nur sehr wenig CaO. Sie benötigen deshalb, im Gegensatz zu den latent-hydraulischen Bindemitteln, für ein hydraulisches, auf der Bildung von Calciumsilicathydraten beruhendes Erhärten, zwingend einen Zusatz von CaO oder Ca(OH)₂.

Kalkreiche Flugaschen, Trass, Ziegelmehl und getemperte Tone und Schiefer können je nach chemischer und mineralogischer Zusammensetzung, vor allem hinsichtlicht ihrer Gehalte und der Verteilung des reaktionsfähigen CaO, SiO₂ und Al₂O₃ (reaktive Phase, Glasgehalt, etc.), latent-hydraulische oder puzzolanische Eigenschaften aufweisen.

Flugasche wird durch die elektrostatische oder mechanische Abscheidung staubartiger Partikel aus den Rauchgasen von Verbrennungskraftwerken gewonnen. Typischerweise liegen Flugaschepartikel überwiegend in kugeligglasiger Form vor.

Nach Angaben des FEhS Institutes für Baustoff - Forschung e.V. aus dem Jahr 2006 waren 142 in den Jahren 1995 bis 2006 untersuchte europäische Hüttensande im Durchschnitt wie in Tabelle 1 dargestellt zusammengesetzt (glühverlustfrei gerechnete Gehalte der Hauptkomponenten in %):

**Tabelle 1:**

| | Mittelwert | Min. | Max. |
|---|---|---|---|
| CaO | 39,4 | 30,7 | 45,6 |
| MgO | 8,8 | 3,5 | 17,3 |
| SiO₂ | 36,8 | 30,7 | 44,0 |
| Al₂O₃ | 11,2 | 5,4 | 16,4 |
| FeO | 0,6 | 0,1 | 2,2 |

Der mittlere Glasgehalt dieser Hüttensande lag bei 95%.

Erhebliche Forschungsaktivitäten haben im Laufe der Zeit dazu geführt, dass bestimmte Stoffgruppen als Anreger der latent-hydraulischen Eigenschaften der Hüttensande identifiziert und nutzbar gemacht werden konnten. Grundsätzlich können im Hinblick auf die hydraulische Aktivität von Hüttensanden derzeit folgende Aussagen als gesichert gelten:
- Eine Erhöhung der Basizität CaO/SiO₂ (C/S - Verhältnis) führt zu einer Steigerung der Reaktivität.
- Das hydraulische Erhärtungsvermögen steigt mit zunehmendem Gehalt an CaO und MgO
- Höhere Gehalte an Aluminiumoxid erhöhen die Anfangsfestigkeit unter folgenden Bedingungen:
   ∘ Diese Aussage gilt für den glasigen Anteil des Hüttensandes;
   ∘ Die Bindemittel enthalten Sufatträger zur Bindung des Aluminiums durch die Bildung von Ettringit.

Im Wesentlichen spricht man heute von zwei grundsätzlichen Anregungsformen: der alkalischen- und der sulfatischen Anregung. Die anregende Wirkung des basischen Kalkhydrates auf latent-hydraulische und/oder puzzolanische Materialien, hier anhand des Beispiels von Hüttensand verdeutlicht, wurde früh erkannt und bereits 1865 zur Herstellung von Schlackensteinen kommerziell genutzt. 1879 wurden erstmals hüttensandhaltige Portlandzemente hergestellt und so die anregende Wirkung des bei der Hydratation der Calciumsilicate entstehenden Kalkhydrates zusammen mit den im Portlandzement zusätzlich vorhandenen Alkalihydroxiden genutzt. Das vom Portlandzement freigesetzte Kalkhydrat wirkt hier als Aktivierer der latent-hydraulischen Eigenschaften des Hüttensandes und hat, im Gegensatz zu seiner Rolle bei den Puzzolanen, nicht ausschließlich die Aufgabe, durch Reaktion mit reaktivem SiO₂ neue, festigkeitsrelevante Mengen von Calciumsilicathydraten zu bilden.

Die latent-hydraulischen Eigenschaften der Hüttensande haben dazu geführt, dass sie über die Jahrzehnte hinweg in stetig zunehmendem Maße als Bestandteil von Zementen eingesetzt worden sind. Nach EN 197-1 kann in den Portlandhüttenzementen CEM II/A-S und CEM II/B-S Hüttensand zwischen 6 und 35 %, in den Hochofenzementen CEM III/A und CEM III/B zwischen 36 und 80 % enthalten sein und entsprechende Anteile Klinker ersetzen. Da der CaO - Gehalt der Hüttensande im Mittel bei ca. 40 % liegt und damit nur ungefähr 2/3 des mittleren CaO - Gehaltes von Portlandzement CEM I beträgt, ist die Produktion von hüttensandhaltigen Zementen grundsätzlich mit einer Minderung der CO₂ Emissionen verbunden, die in einem direkten Verhältnis zu ihrem Hüttensandgehalt steht.

Auch im Hinblick auf seine Dauerhaftigkeit und Widerstandsfähigkeit gegen aggressive, z.B. gegen sulfathaltige- oder schwach saure, Wässer ist ein steigender Gehalt von latent-hydraulischen und/oder puzzolanischen Materialien im Portlandzement von Vorteil.

Ein wesentliches, limitierendes Kriterium für die Einsatzmenge von latent-hydraulischen und/oder puzzolanischen Materialien im Zement ist allerdings die Tatsache, dass ein zunehmender Ersatz von fein gemahlenem Portlandzementklinker durch zum Beispiel Hüttensand vergleichbarer Feinheit in den ersten Tagen nach dem Anmachen mit Wasser zu systematisch abnehmenden Druckfestigkeiten im Mörtel und Beton führt. Während man dieses Phänomen in der Vergangenheit als "geringere Reaktivität" interpretiert hat, sieht man heute den Reaktivitätsbegriff zunehmend differenzierter. Es hat sich gezeigt, dass in ihrer Fähigkeit mit Wasser zu reagieren als "wenig reaktiv" eingestufte, d.h. korrosionsbeständigere Hüttensande, in Mischungen mit Portlandzementen regelmäßig zu höheren Frühfestigkeiten führen als gleiche Mischungen mit "reaktiven" Hüttensanden. In diesem Sinne werden zunehmend Versuche unternommen, durch geeignete Additive die Bildung von ungünstigen, zu niedrigeren Druckfestigkeiten führenden Reaktionsprodukten bei den "reaktiven" Hüttensanden zu verhindern.

Im Gegensatz zur alkalischen Anregung, die hauptsächlich bei den hüttensandhaltigen Portlandzementen wirksam ist, beruht die von H. Kühl entdeckte, sulfatische Anregung im ersten Schritt auf der Bildung von Ettringit, d.h. einer direkten chemischen Reaktion zwischen dem Al₂O₃- Gehalt der Hüttensande, geringen Mengen zugesetztem Kalkhydrat und 15 bis 20 % zugesetztem Calciumsulfat.

Auch auf dem Gebiet der sogenannten Sulfat-Hüttenzemente gibt es in neuerer Zeit wieder erhebliche Aktivitäten verschiedener Baustoffhersteller, mit dem Ziel, die bekannten Nachteile dieses Bindemittelsystems zu überwinden. Die abnehmenden Frühfestigkeiten durch fortschreitende Verringerung des Al₂O₃ Gehaltes der Hüttensande hatten in den 70er Jahren des 20. Jahrhunderts letztlich zur Rücknahme der seit 1937 bestehenden Norm DIN 4210 geführt.

Ein Nachteil der bekannten Anreger ist der hohe pH-Wert des mit Wasser angemachtem Bindemittels. So hat eine gesättigte Calciumhydroxidlösung einen pH-Wert von 12,6. Hohe pH-Werte sind zum einen im Hinblick auf den Arbeitsschutz unerwünscht, weil sie einen zusätzliche Aufwand und damit Kosten bedeuten. Zum anderen gibt es Anwendungen, bei denen mit dem Bindemittel in Kontakt kommende andere Materialien gegenüber hohen pH-Werten empfidlich sind, beispielsweise eingebettet Glasfasern. Es besteht daher Bedarf an Anregern und Bindemitteln, die eine zuverlässige und rasche Erhärtung bei niedrigeren pH-Werten ermöglichen.

Ein Vorschlag hierfür findet sich in WO 2012/055517 A1, die beschreibt, dass das schwach alkalische und nahezu wasserunlösliche Magnesiumhydroxidcarbonat geeignet ist, als Zusatz zu Hüttensand zementüblicher Mahlfeinheit, nach dem Anmachen mit Wasser zu einer Paste oder einem Mörtel, innerhalb kurzer Zeit mit dem Hüttensand praktisch vollständig zu reagieren und dabei einen Erhärtungsvorgang zu bewirken.

Ein weiterer Vorschlag ist die Verwendung von Ternesit, C₅S₂$, die in der EP 2 617 691 A1 beschrieben wird.

Eine Anregung mit Kalk erfolgt in Kalk-Schlacke-Mischbindemitteln, siehe z.B. Micheline Moranville Regourd, Cements made from blast furnance slag in Leas Chemistry of cement and concrete, 2001, Seite 647. Kalk Schlacken Mischbinder "lime slag cements" entstehen durch Mischen von kalkreichem Hüttensand mit 10-30% Kalk oder hydraulischem Kalk. Hier sind die langsame Erhärtung im Vergleich zu Portlandzement und die Alterung bzw. Qualitätsverschlechterung während der Lagerung (da der enthaltene Kalk karbonatisieren kann) nachteilig. Mit Natriumsulfat- oder Gipszugaben kann der langsamen Festigkeitsentwicklung entgegengesteuert werden. Natriumsulfat kann aber zu Ausblühungen führen. Link, T. et al. in "Reactivity and phase composition of Ca2SO4 binders made by annealing of alpha-dicalcium silicate hydrate" in Cement & Conrete Research, Nr. 67, Seiten 131-137, 2015 zeigen die Herstellung und Untersuchung von von x-Ca₂SiO₄. Matkovic, M. et al. in "The effect of combined additions of silica fume, calcium sulphoaluminate, and gypsum on the hydration and strength development of Ca2SiO4" in Advances in Cement Research, Bd. 4, Nr. 1, Seiten 9-15, 01/1991 zeigen den Einsatz von beta-C₂S.

Aufgabe der Erfindung war es, einen weiteren Anregungsmechanismus zu schaffen, der im Stande ist, latent-hydraulische und/oder puzzolanische Materialien, wie fein gemahlene Hüttensande, industrielle und natürliche (Flug)Aschen, künstliche Gläser und getemperte Tone / Schiefer, auch ohne Anwendung der bekannten, hoch alkalischen oder sulfatischen Anregung (durch Anhydrit, Basanit und/oder Gips), nach dem Anmachen mit Wasser innerhalb weniger Stunden zu einer festigkeitsbildenden Reaktion zu veranlassen.

Überraschend wurde nun gefunden, dass ein durch hydrothermale Behandlung und Tempern hergestelltes Belit in der Lage ist, die hydraulische Reaktion von latent-hydraulischen und/oder puzzolanischen Materialien anzuregen.

Die Erfindung löst daher die obige Aufgabe durch ein hydraulisches Bindemittel auf Basis von Klinkerersatzmaterial und reaktivem Belit, enthaltend x-Ca₂SiO₄ in einem Gehalt von > 30 Gew.-% und mindestens eine röntgenamorphe Phase mit einem Gehalt von > 5 Gew.-%, als Anreger, wobei der Anreger erhältlich ist durch hydrothermale Behandlung eines Ausgangsmaterials, welches Quellen für CaO und SiO₂ enthält, in einem Autoklaven bei einer Temperatur von 100 bis 300 °C und einer Verweilzeit von 0,1 bis 24 Stunden, und Tempern des erhaltenen Zwischenproduktes bei 350 bis 495 °C und einer Verweilzeit von 0,01 bis 600 min., durch ein Verfahren zur Anregung von Klinkerersatzmaterial durch Zusatz von reaktivem Belit gemäß Anspruch 10, sowie durch ein Verfahren zur Herstellung eines Bindemittels gemäß Anspruch 12. Schließlich wird die Aufgabe durch Verwendung von Belit als Anreger für Klinkerersatzmaterial in hydraulischen Bindemitteln gemäß Anspruch 14 und einen Baustoff gemäß Anspruch 13 gelöst.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

Reaktives Belit, welches durch hydrothermale Behandlung und anschließendes Tempern erhältlich ist, ist an sich bekannt. So beschreibt die EP 2 676 943 A1 ein Verfahren zur Herstellung von Belitzement mit hoher Reaktivität, bei dem ein Ausgangsmaterial aus Rohstoffen bereitgestellt wird, welche ein molares Ca/Si-Verhältnis von 1,5 bis 2,5 aufweisen, das Ausgangsmaterial im Autoklaven bei einer Temperatur von 100 bis 300 °C und einer Verweilzeit von 0,1 bis 24 h hydrothermal behandelt wird, wobei das Wasser/Feststoff-Verhältnis von 0,1 bis 100 beträgt, das dabei erhaltene Zwischenprodukt bei 350 bis 495 °C getempert wird, wobei die Aufheizrate von 10 - 6000 °C/min und die Verweilzeit von 0,01 - 600 min beträgt, und wobei während des Mischens und/oder in den folgenden Schritten 0,1 bis 30 Gew.-% zusätzliche Elemente und/oder Oxide zugegeben werden.

Weitere Verfahren zur Herstellung von reaktivem Belit finden sich in den in diesem Dokument erwähnten Dokumenten zum Stand der Technik.

Aus der EP 2 801 558 A1 ist zudem die Verwendung eines Belit-Calciumaluminats als Beschleuniger für Portlandzement bekannt, welches in einem Verfahren erhältlich ist, das die die Schritte umfasst: Bereitstellen eines Ausgangsmaterials, das ein molares Ca/(Si+Al+Fe)-Verhältnis von 1,0 bis 3,5 und ein molares Al/Si-Verhältnis von 100 bis 0,1; Mischen der Rohstoffe; Hydrothermales Behandeln des Ausgangsmaterials im Autoklaven bei einer Temperatur von 100 bis 300 °C und einer Verweilzeit von 0,1 bis 24 h, wobei das Wasser/Feststoff-Verhältnis 0,1 bis 100 beträgt; Tempern des erhaltenen Zwischenprodukts bei 350 bis 600 °C, wobei die Aufheizrate 10-6000 °C/min beträgt und die Verweilzeit 0,01-600 min beträgt.

Eine Brauchbarkeit von reaktivem Belit als Anreger für Klinkerersatzmaterial, d.h. latent-hydraulische und/oder puzzolanische Materialien, wie zum Beispiel Hüttensand oder Metakaolin, bzw. eine Festigkeitsbildung von Bindemitteln aus reaktivem Belit und latent-hydraulischen und/oder puzzolanischen Materialien lässt sich diesen Dokumenten nicht entnehmen. Es war somit sehr überraschend, dass durch hydrothermale Behandlung und Tempern erhältliches Belit in Kombination mit latent-hydraulischen und/oder puzzolanischen Materialien eine ausreichende bis sogar hohe Frühfestigkeit bereitstellt.

Reaktives Belit kann durch hydrothermale Behandlung eines Ausgangsmaterials aus einem oder mehreren Rohstoffen, welche ausreichende Mengen CaO und SiO₂ bereitstellen, hergestellt werden. Dabei eignen sich einerseits reine bzw. im Wesentlichen reine Rohstoffe wie Calciumcarbonat oder -oxid und Quarzmehl oder Microsilica. Andererseits kann eine Vielzahl natürliche aber auch industrielle Materialien, wie zum Beispiel, aber nicht ausschließlich, Kalkstein, Bauxit, Ton / Tonstein, kalzinierte Tone (z.B. Metakaolin), Basalte, Periodite, Dunite, Ignimbrite, Karbonatite, Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Ausgangsmaterial verwendet werden. Es fallen ebenfalls namentlich nicht genannte Stoffe / Stoffgruppen in den Schutzbereich, welche die chemischen Mindestanforderungen als potentielle Rohstoffe erfüllen.

Besonders bevorzugt sind Rohstoffe, die zugleich SiO₂ und CaO enthalten, so dass das gewünschte Verhältnis Ca/Si bereits vorliegt. Ist das gewünschte Ca/Si-Verhältnis nicht vorhanden, so müssen die Rohstoffe vor der weiteren Behandlung bezüglich der chemischen Zusammensetzung durch Zugabe weiterer Reaktionspartner wie Ca- oder Si-haltiger Feststoffe auf ein geeignetes Ca:Si-Verhältniss im Ausgangsmaterial, das in der Regel von 1,5 bis 2,5 beträgt, eingestellt werden. Hierfür eignen sich beispielsweise Portlandit Ca(OH)₂ oder gebrannter oder ungebrannter Kalk. In der Regel werden die Rohstoffe bzw. das Ausgangsmaterial bezüglich Korngrösse und Korngrössenverteilung durch mechanische oder thermische Behandlung optimiert, wobei die thermische Behandlung auch zu einer Optimierung der chemischen Zusammensetzung führen kann.

Die bevorzugten sekundären Rohstoffe bringen zusätzlich zu Quellen für CaO und SiO₂ auch weitere Elemente wie Aluminium, Eisen, Magnesium und andere in die Ausgangsmaterialmischung ein. Diese weiteren Elemente werden als Fremdionen in die Phasen eingebaut oder bilden eigene Phasen aus. Sofern sie vorhanden sind, wird ein molares (Ca+Mg)/(Si+Al+Fe)-Verhältnis von 1 bis 3.5, ein molares Verhältnis Ca:Mg von 0,1 bis 100 und ein molares Verhältnis (Al+Fe)/Si von 100 bis 0,1 bevorzugt. Das molare Verhältnis der Summe von Calcium und Magnesium zur Summe von Silizium, Aluminium und Eisen soll vorzugsweise von 1,5 bis 2,5, besonders bevorzugt etwa 2, betragen. Das Verhältnis von Calcium zu Magnesium beträgt vorzugsweise von 0,2 bis 20, besonders bevorzugt von 0,5 bis 5. Das Verhältnis der Summe von Aluminium und Eisen zu Silizium beträgt für einen hohen Aluminiumgehalt bevorzugt von 100 bis 10, für einen mittleren Aluminiumgehalt von 1 bis 20 und für einen niedrigen Aluminiumgehalt von 0,01 bis 2.

In einer bevorzugten Ausgestaltung wird Feinkornmaterial als Ausgangsmaterial gewählt, dessen Größtkorn vorzugsweise höchstens 0,1 mm beträgt. Hierfür kommen insbesondere die feineren Kornfraktionen aus der Wiederaufbereitung von zementhaltigen Bindemitteln in Baustoffen wie Altbetonen und -zementen zum Einsatz. Ein feineres Ausgangsmaterial ist sowohl im Hinblick auf die Umsetzungsgeschwindigkeit vorteilhaft.

Das Ausgangsmaterial bzw. die Rohstoffe kann/können in einem zusätzlichen Schritt gebrannt werden. Dieser Schritt ist besonders bevorzugt bei der Verwendung von industriellen Nebenprodukten oder relativ wenig reaktiven bzw. groben Materialien als Rohstoffe. Dabei sind Temperaturen von 400 bis 1400 °C, vorzugsweise von 750 bis 1100 °C, geeignet. Die Brenndauer beträgt von 0,1 bis 6 Stunden, bevorzugt etwa 1 Stunde. Durch das Brennen des Ausgangsmaterials/der Rohstoffe ergibt sich der Vorteil, dass Stoffe gezielt nutzbar gemacht werden, welche ansonsten kaum / nicht verwendet werden können (z.B. kristalline Aschen und Schlacken usw.) indem eine verbesserte/größere Umsetzbarkeit im Autoklaven zum Zwischenprodukt α-C₂SH ermöglicht wird (durch Entsäuerung und / oder Entwässerung...). Des Weiteren bietet sich der Vorteil, dass gezielt Precursor-Phasen (z.B. reaktionsträger Belit) erzeugt werden können, welche nach dem hydrothermalen Behandeln und Tempern Produkte mit besonders hohen Gehalten an x-C₂S, α-C₂S und/oder mindestens einer reaktiven, röntgenamorphen Phase aufweisen. Der Vorteil der Verwendung von Belit als Rohmaterial für den Autoklavprozess ist eine verbesserte Phasenzusammensetzung des finalen Produkts gegenüber ungebrannten Rohstoffen.

Es ist vorteilhaft dem Ausgangsmaterial, z.B. während des Mischens der Rohstoffe, oder in einem der anschließenden Prozessschritte zusätzliche Elemente oder Oxide in einer Menge von 0,1 bis 30 Gew.-% zuzufügen. Natrium, Kalium, Bor, Schwefel, Phosphor oder deren Kombination sind als diese zusätzlichen Elemente/Oxide, die auch zusammenfassend als Fremdoxide bezeichnet werden, bevorzugt. Hierfür eignen sich Alkali- und/oder Erdalkali-Salze und/oder Hydroxide, beispielweise CaSO₄ • H₂O, CaSO₄ • ½ H₂O, CaSO₄, CaHPO₂ • 2 H₂O, Ca₃P₂O₈, NaOH, KOH, Na₂CO₃, NaHCO₃, K₂CO₃, MgCO₃, MgSO₄, Na₂Al₂O₄, Na₃PO₄, K₃PO₄, Na₂[B₄O₅(OH)₄] • 8H₂O usw. In einer bevorzugten Ausführungsform weist das Ausgangsmaterial ein molares Verhältnis P/Si von etwa 0,05 und/oder S/Si von etwa 0,05 und/oder Ca/K von etwa 0,05 auf.

Das, ggfs. wie beschrieben vorbehandelte, Ausgangsmaterial kann vorteilhaft mit Kristallisationskeimen, die beispielsweise Calciumsilikathydrate, Portlandklinker, Hüttensand, Magnesiumsilikate, Calciumsulfataluminat(belit)-zement, Wasserglas, Glaspulver etc. enthalten, versetzt, also geimpft werden. Die Reaktion kann hierbei durch Impfen mit von 0,01 - 30 Gew.-% verschiedener Calciumsilikathydrat enthaltender Verbindungen, insbesondere mit α-2CaO·SiO₂·H₂O, Afwillit, Calciochondrodit, β-Ca₂SiO₄ und anderen Verbindungen, beschleunigt werden.

Das Ausgangsmaterial, welches ggf. wie oben beschrieben vorbehandelt und/oder geimpft ist, wird anschließend einer hydrothermalen Behandlung im Autoklaven bei einer Temperatur von 100 bis 300 °C, bevorzugt von 150 °C bis 250 °C unterzogen. Hierbei wird bevorzugt ein Wasser/Feststoff-Verhältnis von 0,1 bis 100, bevorzugt von 2 bis 20 gewählt. Die Verweilzeiten betragen von 0,1 bis 24 Stunden, bevorzugt von 1 bis 16 Stunden, insbesondere von 2 bis 8 Stunden. Durch die hydrothermale Behandlung wird das Ausgangsmaterial in ein mindestens ein Calciumsilikathydrat und ggf. weitere Verbindungen enthaltendes Zwischenprodukt umgewandelt.

In einer Ausführungsform kann das Zwischenprodukt gemahlen werden, wobei der Mahlprozess sowohl am nassen als auch am getrockneten Zwischenprodukt erfolgen kann. Ziel der Mahlung ist eine Deagglomeration und eine Verbesserung des Kornbandes. Es können sowohl das Zwischenprodukt als auch Mischungen mit dem anzuregenden Klinkerersatzmaterial oder Teilen davon gemahlen werden. Es wurde überraschend gefunden, dass eine Mahlung des Zwischenprodukts zu signifikant reaktiveren Endprodukten führt. Es findet jedoch kein Reaktionsmahlen statt, d.h. die zugeführte Mahlenergie wird so begrenzt, dass im wesentlichen keine chemischen Umwandlungen ausgelöst werden.

Das, ggfs. gemahlene, Zwischenprodukt wird bei einer Temperatur von 350 °C bis 495°C, vorzugsweise bei mehr als 400 °C, getempert. Hierbei beträgt die Aufheizrate von 10 - 6000 °C/min, bevorzugt von 20 - 100 °C/min und besonders bevorzugt etwa 40 °C/min. Eine Verweilzeit von 0,01 - 600 min, bevorzugt von 1 - 120 min und besonders bevorzugt von 5 - 60 min ist geeignet.

Zur Senkung des Anteils an reaktionsträgerem γ-C₂S bewährt sich eine zusätzliche Haltezeit während des Aufheizens bei 400 - 440 °C von 1 - 120 min, bevorzugt von 10 - 60 min.

Es hat sich außerdem gezeigt, dass eine Abführung des während der Temperung gebildeten Wassers für die Reaktivität günstig ist. Daher wird vorzugsweise während der Temperung das gebildete Wasser beispielsweise durch einen kontinuierlichen Gasstrom oder durch Unterdruck oder durch ein hohes Oberfläche/Volumenverhältnis des Zwischenprodukts abgeführt. Besonders bevorzugt ist ein kontinuierlicher Gasstrom, insbesondere Luftstrom.

Nach dem Abkühlen erhält man ein Endprodukt, welches das gewünschte, reaktive Belit enthält. Das Endprodukt enthält 30 - 100 % der folgenden Verbindungen: x-Ca₂SiO₄, röntgenamorphe Verbindungen variabler Zusammensetzung, β-Ca₂SiO₄ und reaktives γ-Ca₂SiO₄ mit einem phasenspezifischen Hydratationsgrad von zumeist mindestens 50 % in den ersten 7 Tagen nach dem Anmachen mit Wasser.

Die BET-Oberfläche des Endprodukts soll von 1 bis 30 m²/g betragen. Die SiO₂-Tetraeder im Endprodukt weisen einen mittleren Kondensationsgrad von weniger als 1,0 auf. Der Wassergehalt im Bindemittel beträgt weniger als 3,0 Gew.-%.

Das Endprodukt wird gegebenenfalls in an sich bekannter Weise auf eine gewünschte Feinheit bzw. Kornverteilung gemahlen. Die Mahlung kann auch gemeinsam mit dem Klinkerersatzmaterial oder Teilen davon erfolgen. Übliche Mahlhilfsmittel, wie z.B. Alkanolamine, Ethylenglycole und Propylenglycole, können verwendet werden. Ein Mahlen kann bei feinen Rohstoffen und geeigneter Kornverteilung entbehrlich sein. Wenn bereits das Zwischenprodukt oder Mischungen aus dem Zwischenprodukt und zu aktivierendem Klinkerersatzmaterial gemahlen wurden, kann ein weiter Mahlvorgang des getemperten Produktes meist entfallen.

Das Endprodukt enthält x-Ca₂SiO₄ in einem Gehalt von > 30 Gew.-% und mindestens eine röntgenamorphe Phase mit einem Gehalt > 5 Gew.-%, wobei sich alle Anteile des Endprodukts auf 100 % summieren.

Durch das Verfahren kann hochreaktives Belit hergestellt werden, welches sich als Anreger für Klinkerersatzmaterialien eignet. Es sind sehr reaktive Polymorphe und röntgenamorphe Phasen enthalten. Weiterhin ist auch γ-Ca₂SiO₄ enthalten. Die Bildung dieses Polymorphs wird bei der Portlandzementherstellung durch eine schnelle Klinkerkühlung vermieden, da dieser Polymorph keinen Beitrag zur Festigkeitsentwicklung leistet. Im Unterschied zur Herstellung dieser Phase durch Sintern, zeigt sie bei Herstellung durch hydrothermale Behandlung und Tempern bei < 500 °C eine gute Reaktivität. Derart hergestellte Materialien haben in wässriger Umgebung einen pH-Wert unter 12,6, wobei der pH Wert von unter 12 direkt nach dem Mischen mit Wasser bis zu etwa 12,5 nach 30 bis 60 Minuten ansteigt.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet sowie ein auf anderem Wege erhaltenes, gleich feinkörniges Material, welches nach dem Mischen mit Wasser hydraulisch reagiert. Bindemittel oder Bindemittelmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt. Soweit nichts anderes angegeben ist mit "reaktiv" eine hydraulische Reaktivität gemeint.

Im erfindungsgemäßen Bindemittel wird zumindest ein Klinkerersatzmaterial, d.h. ein latent-hydraulisches und/oder puzzolanisches Material, mit reaktivem Belit, erhältlich wie beschrieben, als Anreger vermischt. Die Mengenanteile sind sehr variabel, vorzugsweise werden 5 bis 95 Gew.-% latent-hydraulisches und/oder puzzolanisches Material und 5 bis 95 Gew.-% Anreger eingesetzt. Bevorzugt sind 30 bis 85 Gew.-% latent-hydraulisches und/oder puzzolanisches Material und 15 bis 70 Gew.-% Anreger, besonders bevorzugt 40 bis 80 Gew.-% latent-hydraulisches Material und 20 bis 60 Gew.-% Anreger, wobei die Werte auf die gesamte Menge an Bindemittel bezogen sind und sich die Anteile mit den restlichen Bindemittelkomponenten zu 100% addieren.

Bevorzugte Puzzolane / latent hydraulische Materialien sind getemperte Tone (z.B. Metakaolin) und Schiefer, V und W Flugaschen mit hohem Glasanteil und/oder Gehalt an reaktiven Phasen, Hüttensande sowie künstliche (puzzolanische und latent hydraulische) Gläser.

Bevorzugt enthält das Bindemittel außerdem Zusatzmittel und/oder Zusatzstoffe sowie ggfs. weitere hydraulisch aktive Komponenten und/oder Sulfatträger.

Bei den Zusatzstoffen handelt es sich um hydraulisch nicht aktive Komponenten, wie zum Beispiel, aber nicht ausschließlich, gemahlener Kalkstein / Dolomit, gefälltes CaCO₃, Mg(OH)₂, Ca(OH)₂, CaO, Silica Fume und Glasmehl. Die Zusatzstoffe können in Summe in einer Menge im Bereich von 1 bis 25 Gew.-%, vorzugsweise von 3 bis 20 Gew.-% und noch stärker bevorzugt von 6 bis 15 Gew.-% dosiert werden.

Als Sulfat eignen sich besonders Alkali- und / oder Erdalkalisulfate, vorzugsweise in Form von Gips und / oder Halbhydrat und / oder Anhydrit und / oder Magnesiumsulfat und / oder Natriumsulfat und / oder Kaliumsulfat.

In einer bevorzugten Ausführungsform enthält das Bindemittel mindestens ein zusätzliches hydraulisches Material, vorzugsweise Portlandzement. Dabei kann der Portlandzement sowohl analog zu den Portlandhüttenzementen mengenmäßig überwiegen, als auch analog zu den Hochofen- und Kompositzementen vergleichbare Mengen Portlandklinker und Gemisch von latent-hydraulischem Material mit Anreger bis hin zu überwiegend Gemisch von latent-hydraulischem Material mit Anreger enthalten. Vorzugsweise kann das Bindemittel von 1 bis 70 Gew.-%, insbesondere von 5 bis 40 Gew.-% und besonders bevorzugt von 10 bis 25 Gew.-%, Portlandzement enthalten.

Der Anreger, das latent-hydraulische und/oder puzzolanische Material, sowie ggfs. vorhandene Zusätze, wie zum Beispiel Kalkstein und/oder Portlandzementklinker und/oder andere Klinker und/oder Sulfatträger, sind in dem erfindungsgemäßen Bindemittel auf eine Feinheit (nach Blaine) von 2000 bis 10000 cm²/g, vorzugsweise von 3000 bis 6000 cm²/g und besonders bevorzugt von 4000 bis 5000 cm²/g gemahlen. Die Mahlung kann in an sich bekannter Weise getrennt oder gemeinsam erfolgen.

Vorzugsweise enthält der Zement bzw. die Bindemittelmischung außerdem als Zusatzmittel einen oder mehrere Abbinde- und / oder Erhärtungsbeschleuniger, vorzugsweise ausgewählt unter Komponenten mit verfügbarem Aluminium beziehungsweise solchen, die in Kontakt mit Wasser Aluminium, zum Beispiel in der Form von Al(OH)₄⁻ oder amorphes Al(OH)₃-Gel, freisetzen, wie zum Beispiel, aber nicht ausschließlich, lösliche Alkali-/Erdalkalialuminate und Aluminiumsalze (z.B. Na₂Al₂O₄, K₂Al₂O₄, Aluminiumnitrat, -acetate, -chlorid, -formiat, -sulfat, etc.), reaktives und/oder amorphes Aluminiumhydroxid (z.B. Al(OH)₃), Calciumaluminat-, Calciumsulfoaluminatzement und/oder Geopolymer Binder. Des Weiteren kann der Zement bzw. die Bindemittelmischung als Zusatzmittel einen oder mehrere Abbinde- und / oder Erhärtungsbeschleuniger, ebenfalls in Kombination mit den vorgenannten Komponenten mit verfügbarem Aluminium, vorzugsweise ausgewählt unter Lithiumsalzen und -hydroxiden, anderen Alkalisalzen und -hydroxiden, Alkalisilikaten enthalten. Die Abbinde- und / oder Erhärtungsbeschleuniger können in Summe in einer Menge im Bereich von 0,01 bis 15 Gew.-%, vorzugsweise von 0,5 bis 8 Gew.-% und noch stärker bevorzugt von 1 bis 5 Gew.-% dosiert werden

Erhärtungsbeschleunigende Zusätze, wie zum Beispiel Alkali/Erdalkali-Aluminate, Aluminiumsalze, Alkalisalze, -silikate und -hydroxide, welche den pH-Wert der Lösung erhöhen, sind besonders bevorzugt.

Es ist weiter bevorzugt, wenn Betonverflüssiger und / oder Fließmittel und / oder Verzögerer, vorzugsweise auf Basis von Ligninsulfonaten, sulfoniertem Naphthalin-, Melamin- oder Phenolformaldehydkondensat, oder auf Basis von Acrylsäure- Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und Borate, Oxalate, Sulfanilsäure, Aminocarbonsäuren, Salicylsäure und Acetylsalicylsäure, Dialdehyde enthalten sind.

Weiterhin können auch Luftporenbildner, Hydrophobiermittel, Dichtungsmittel, und/oder Stabilisierer enthalten sein. Die Dosierung der Zusatzmittel erfolgt in der üblichen Menge.

Das erfindungsgemäße Bindemittel kann in an sich bekannter Weise für alle Anwendungen, in denen ansonsten Portlandzement, Portlandhüttenzement, Kompositzement usw. verwendet werden, zum Einsatz kommen. In der Regel wird das Bindemittel zum Einsatz mit Gesteinskörnungen und ggfs. weiteren Zusätzen z.B. zu Beton, Mörtel, Putz, Estrich etc. vermischt und mit Wasser angemacht.

Bei der Verarbeitung des erfindungsgemäßen Bindemittels ist ein Wasser / Bindemittelwert von 0,2 bis 2 geeignet, bevorzugt von 0,3 bis 0,8 und besonders bevorzugt von 0,35 bis 0,5.

Der erfindungsgemäße Zement bzw. das erfindungsgemäße Bindemittel eignet sich hervorragend zur Verfestigung von Altlasten. Hierbei ist ein Gehalt an adsorptiv wirksamen Zusatzstoffen, z.B. Zeolithen und / oder lonenaustauscherharzen, bevorzugt. Bei der Immobilisierung von Schwermetallen in anorganischen Bindemitteln kann ein hoher pH-Wert von Vorteil sein, der die Bildung schwer löslicher Hydroxide begünstigt. Dies kann zum Beispiel, aber nicht ausschließlich, durch ein Mischen des erfindungsgemäßen Bindemittels mit Portlandzement und/oder Alkalisalzen und -hydroxiden realisiert werden.

Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 2 ist der verwendete Hüttensand (HÜS), mit dem die im Folgenden beschriebenen Beispiele durchgeführt wurden, anhand seiner oxidischen Hauptbestandteile charakterisiert. Der Gewichtsverlust nach einem Tempern bei 1000 °C ist ebenfalls angegeben. Die Mahlfeinheit beträgt 5750 cm²/g nach Blaine.

**Tabelle 2:**

| Bestandteil | Gehalt [%] |
|---|---|
| GV 1000 °C | 0,5 |
| SiO₂ | 35,4 |
| Al₂O₃ | 12,6 |
| TiO₂ | 1,18 |
| MnO | 0,28 |
| Fe₂O₃ | 0,4 |
| CaO | 42,9 |
| MgO | 4,8 |
| K₂O | 0,36 |
| Na₂O | 0,24 |
| SO₃ | 0,2 |
| P₂O₅ | 0,04 |
| S | 1,35 |
| Summe | 100,15 |

### Beispiel 1

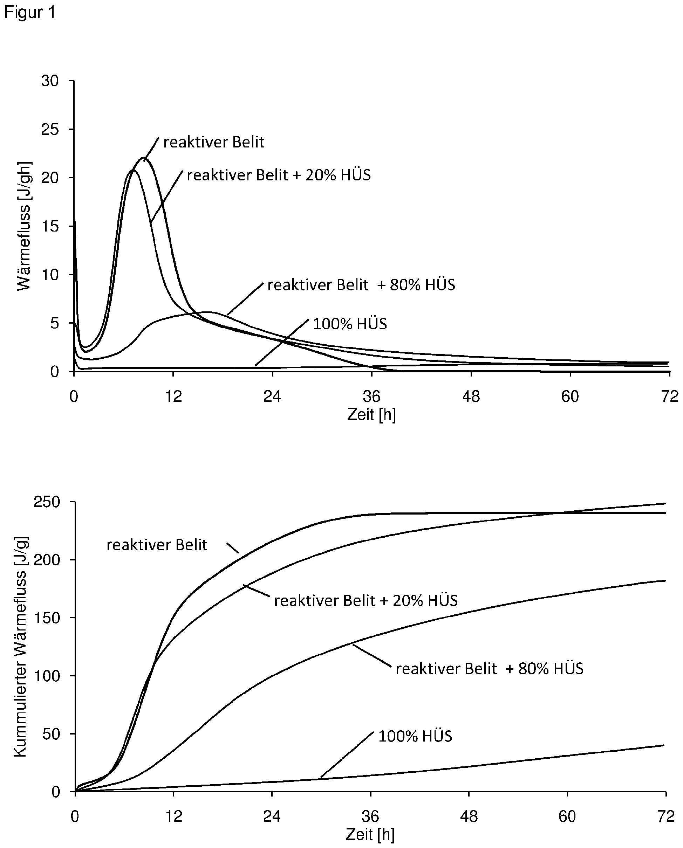

Für die Herstellung des reaktiven Belits als Anreger wurde zunächst ein Zwischenprodukt wie folgt synthetisiert. Herstellen einer Mischung aus Ca(OH)₂ und nano-SiO₂ im molaren Verhältnis 2:1. Nach der Zugabe von Impfkeimen aus 5 Gew.-% α-2CaO·SiO₂·H₂O wurde die Mischung mit Wasser homogenisiert. Das Verhältnis Wasser/ Feststoff betrug 2. Es folgte eine Autoklavbehandlung bei 15 Bar für 16 h. Anschließend erfolgte eine Trocknung bei 60°C. Das Zwischenprodukt setzte sich aus 97 Gew.-% α-2CaO·SiO₂·H₂O, und 3 Gew.-% amorphen Bestandteilen zusammen. Durch anschließendes Tempern bei 420°C wurde das Zwischenprodukt in den reaktiven Belit enthaltenden Anreger überführt. Der Anreger bestand aus 50 Gew.-% röntgenamorphen Material, 40 Gew.-% x-Ca₂SiO₄, 5 Gew.-% γ-Ca₂SiO₄ und 3 Gew.-% α-2CaO·SiO₂·H₂O und 2 Gew.-% Calcit. Der so hergestellte Anreger wurde anschließend mit 20 und 80 Gew.-% Hüttensand gemischt und in einem Taumelmischer homogenisiert. Beide Mischungen sowie der reine Hüttensand und der reine Anreger umfassend reaktiven Belit wurden mittels Wärmeflusskalorimetrie hinsichtlich der hydraulischen Reaktivität untersucht. Figur 1 zeigt die gemessenen Wärmeflussraten und die kumulierte Wärmefreisetzung. Tabelle 3 vergleicht die erwarteten Wärmemengen, die aus den Anteilen der reinen Komponenten berechnet wurden, mit den gemessenen Wärmemengen der Mischungen.

**Tabelle 3**

| Anreger | | Hüttensand | | Gesamt-Reaktionswärme nach 3 Tagen | |
|---|---|---|---|---|---|
| Anteil | Gesamtwärm ebeitrag* | Anteil | Gesamtwärmebei trag* | Berechnete Summe* | Messung |
| [Masse %] | [J/g] | [Masse %] | [J/g] | [J/g] | [J/g] |
| 100 | 246 | 0 | 0 | 246 | 246 |
| 80 | 197 | 20 | 6 | 203 | 248 |
| 20 | 49 | 80 | 32 | 81 | 183 |
| 0 | 0 | 100 | 40 | 40 | 40 |

| | | | | | |
|---|---|---|---|---|---|
| *für die Mischungen aus dem Anteil der Komponente berechnet | | | | | |

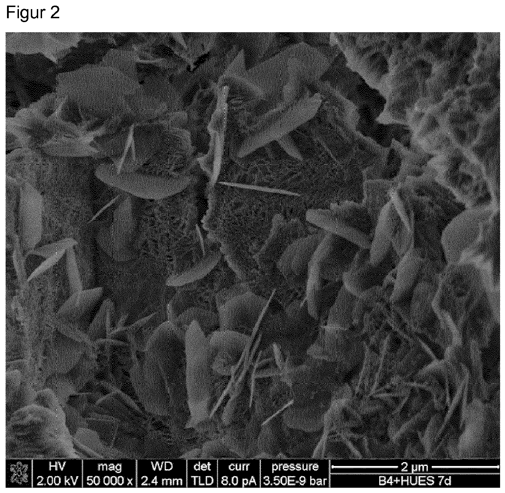

Der Vergleich zeigt, dass die gemessenen Wärmemengen deutlich höher sind als die aus den Komponenten berechneten. Der Unterschied ist auf eine Aktivierung des Hüttensandes zurückzuführen. Die Hydratationsprodukte der Mischung aus Anreger enthaltend reaktiven Belit und 20 Gew.-% Hüttensand wurden zusätzlich mittels Rasterelektronenmikroskopie untersucht. Figur 2 zeigt, dass Hydratationsprodukte des Hüttensandes gebildet wurden.

### Beispiel 2

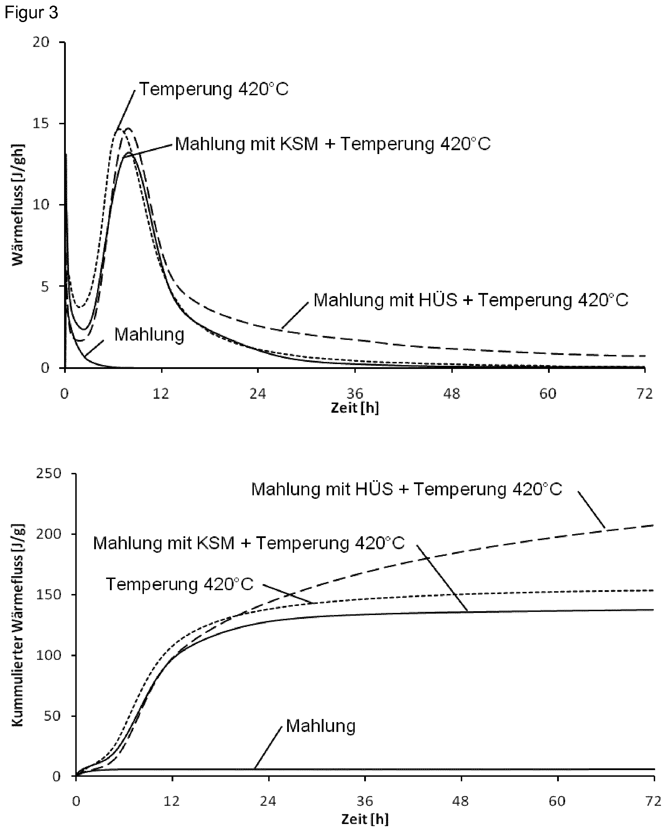

Es wurde eine Mischung aus Ca(OH)₂ und hochdispersem SiO₂ im molaren Verhältnis 2:1 hergestellt. Nach der Zugabe von Impfkeimen aus 5 Gew.-% α-2CaO·SiO₂·H₂O wurde die Mischung mit Wasser homogenisiert. Das Verhältnis Wasser/ Feststoff betrug 10. Es folgte eine Autoklavbehandlung unter ständigem Rühren bei 200 °C für 16 h. Anschließend erfolgte eine Trocknung bei 60°C. Das Zwischenprodukt setzte sich aus 87 Gew.-% α-2CaO·SiO₂·H₂O, 2 Gew.-% Calcit, 2 Gew.-% Skawtit und 9 Gew.-% amorphen Bestandteilen zusammen. Das getrocknete Zwischenprodukt wurde mit 40 Gew.-% Hüttensand gemischt und in einer Planetenkugelmühle für 3 min gemahlen. Anschließend erfolgte eine Temperung bei 420°C. Die Messung der Wärmeentwicklung mittels Wärmeflusskalorimetrie ist in Figur 3 dargestellt. Das Bindemittel wurde hinsichtlich der Druckfestigkeitsentwicklung untersucht. Der Wasser/Bindemittelwert (w/b) wurde unter Verwendung von Fließmittel auf 0,3 eingestellt. Die Festigkeit wurde an Würfeln mit einer Kantenlänge von 4 cm geprüft. Es ergaben sich Festigkeiten von 62 N/mm² nach 2 Tagen, 77 N/mm² nach 7d und 85 N/mm² nach 28 Tagen.

### Beispiel 3

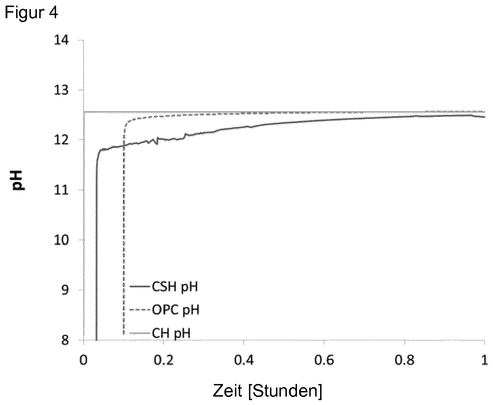

Der pH-Wert von Calciumhydroxid, OPC und erfindungsgemäßem Anreger wurde nach Mischen mit Wasser gemessen. Die Ergebnisse sind in Figur 4 dargestellt. Calciumhydroxid, hellgraue Kurve CH, hatte praktisch unmittelbar nach dem Mischen einen pH-Wert von 12,6. Auch Portlandzement, gestrichelte Kurve OPC, erreichte schnell einen pH Wert über 12. Der erfindungsgemäße Anreger, schwarze Kurve CSH, zeigte im Vergleich zu OPC eine schnellere Lösung, wobei der pH Wert aber über mehr als 30 Minuten unter 12,5 verblieb und auch nach 1 Stunde noch unter 12,6 lag. Der erfindungsgemäße Anreger hat somit einen niedrigeren pH Wert als OPC oder Calciumhydroxid und einen sehr viel niedrigeren pH Wert als Natrium- oder Kaliumhydroxid.

## Patentansprüche

1. Hydraulisches Bindemittel auf Basis von Klinkerersatzmaterial und reaktivem Belit, enthaltend x-Ca₂SiO₄ in einem Gehalt von > 30 Gew.-% und mindestens eine röntgenamorphe Phase mit einem Gehalt > 5 Gew.-%, als Anreger, wobei der Anreger erhältlich ist durch hydrothermale Behandlung eines Ausgangsmaterials, welches Quellen für CaO und SiO₂ enthält, in einem Autoklaven bei einer Temperatur von 100 bis 300 °C und einer Verweilzeit von 0,1 bis 24 Stunden, und Tempern des erhaltenen Zwischenproduktes bei 350 bis 495 °C und einer Verweilzeit von 0,01 bis 600 min..

2. Bindemittel gemäß Anspruch 1, **dadurch gekennzeichnet, dass** es 5 bis 95 Gew.-% Klinkerersatzmaterial und 5 bis 95 Gew.-% Anreger enthält, bevorzugt 30 bis 85 Gew.-% Klinkerersatzmaterial und 15 bis 70 Gew.-% Anreger, besonders bevorzugt 40 bis 80 Gew.-% Klinkerersatzmaterial und 20 bis 60 Gew.-% Anreger, wobei die Werte auf die gesamte Menge an Bindemittel bezogen sind und sich die Anteile mit den restlichen Bindemittelkomponenten zu 100% addieren.

3. Bindemittel gemäß Anspruch 1 oder 2, **dadurch gekennzeichnet, dass** das Klinkerersatzmaterial ausgewählt ist unter getemperten Tonen wie Metakaolin und Schiefer; V und W Flugaschen mit hohem Glasanteil und/oder Gehalt an reaktiven Phasen; Hüttensanden; künstlichen (puzzolanischen und latent hydraulischen) Gläsern und Mischungen davon.

4. Bindemittel gemäß einem der Ansprüche 1 bis 3, **dadurch gekennzeichnet, dass** Zusatzmittel und/oder Zusatzstoffe enthalten sind.

5. Bindemittel gemäß Anspruch 4, **dadurch gekennzeichnet, dass** Zusatzstoffe enthalten sind, die ausgewählt sind unter hydraulisch nicht aktiven Komponenten, wie gemahlener Kalkstein / Dolomit, gefälltes CaCO₃, Mg(OH)₂, Ca(OH)₂, CaO, Silica Fume und Glasmehl.

6. Bindemittel gemäß Anspruch 4 oder 5, **dadurch gekennzeichnet, dass** Zusatzstoffe in Summe in einer Menge im Bereich von 1 bis 25 Gew.-%, vorzugsweise von 3 bis 20 Gew.-% und noch stärker bevorzugt von 6 bis 15 Gew.-% enthalten sind.

7. Bindemittel gemäß einem der Ansprüche 4 bis 6, **dadurch gekennzeichnet, dass** Zusatzmittel enthalten sind, die ausgewählt sind unter Abbindebeschleunigern, Erhärtungsbeschleunigern, Betonverflüssigern, Fließmitteln, Verzögerern und Mischungen davon.

8. Bindemittel gemäß einem der Ansprüche 1 bis 7, **dadurch gekennzeichnet, dass** mindestens ein zusätzliches hydraulisches Material, vorzugsweise Portlandzement, enthalten ist.

9. Bindemittel gemäß Anspruch 8, **dadurch gekennzeichnet, dass** von 1 bis 70 Gew.-%, insbesondere von 5 bis 40 Gew.-% und besonders bevorzugt von 10 bis 25 Gew.-%, zusätzliches hydraulisches Material enthalten sind.

10. Verfahren zur Anregung von latent-hydraulischen und/oder puzzolanischen Klinkerersatzmaterialien durch Zusatz von reaktivem Belit, enthaltend x-Ca₂SiO₄ in einem Gehalt von > 30 Gew.-% und mindestens eine röntgenamorphe Phase mit einem Gehalt > 5 Gew.-%, der erhältlich ist durch hydrothermale Behandlung eines Ausgangsmaterials, welches Quellen für CaO und SiO₂ enthält, in einem Autoklaven bei einer Temperatur von 100 bis 300 °C und einer Verweilzeit von 0,1 bis 24 Stunden, und Tempern des erhaltenen Zwischenproduktes bei 350 bis 495 °C und einer Verweilzeit von 0,01 bis 600 min., zu einem Anreger enthaltend reaktives Belit.

11. Verfahren gemäß Anspruch 10, **dadurch gekennzeichnet, dass** der Anreger gemeinsam mit dem Klinkerersatzmaterial gemahlen wird.

12. Verfahren zur Herstellung eines Bindemittels gemäß einem der Ansprüche 1 bis 9 enthaltend Klinkerersatzmaterial und einen Anreger, enthaltend x-Ca₂SiO₄ in einem Gehalt von > 30 Gew.-% und mindestens eine röntgenamorphe Phase mit einem Gehalt > 5 Gew.-%, wobei der Anreger durch hydrothermale Behandlung eines Ausgangsmaterials, welches Quellen für CaO und SiO₂ enthält, in einem Autoklaven bei einer Temperatur von 100 bis 300 °C und einer Verweilzeit von 0,1 bis 24 Stunden, und Tempern des erhaltenen Zwischenproduktes bei 350 bis 495 °C und einer Verweilzeit von 0,01 bis 600 min., erhalten wird, **dadurch gekennzeichnet, dass** das Zwischenprodukt mit dem Klinkerersatzmaterial oder einem Teil davon gemeinsam vermahlen wird.

13. Baustoff, insbesondere Beton, Mörtel, Putz, Estrich oder Fugenmasse, enthaltend ein Bindemittel gemäß einem der Ansprüche 1 bis 9, und mindestens eines von Gesteinskörnungen, Zusatzmittel und Zusatzstoffen.

14. Verwendung von reaktivem Belit, enthaltend x-Ca₂SiO₄ in einem Gehalt von > 30 Gew.-% und mindestens eine röntgenamorphe Phase mit einem Gehalt > 5 Gew.-%, der erhältlich ist durch hydrothermale Behandlung eines Ausgangsmaterials, welches Quellen für CaO und SiO₂ enthält, in einem Autoklaven bei einer Temperatur von 100 bis 300 °C und einer Verweilzeit von 0,1 bis 24 Stunden, und Tempern des erhaltenen Zwischenproduktes bei 350 bis 495 °C und einer Verweilzeit von 0,01 bis 600 min., zu einem Anreger enthaltend reaktives Belit, als Anreger von latent-hydraulischen und/oder puzzolanischen Klinkerersatzmaterialien in hydraulischen Bindemitteln.

15. Verwendung gemäß Anspruch 14, **dadurch gekennzeichnet, dass** das Bindemittel von 5 bis 95 Gew.-% Klinkerersatzmaterial und 5 bis 95 Gew.-% Anreger enthält, bevorzugt 30 bis 85 Gew.-% Klinkerersatzmaterial und 15 bis 70 Gew.-% Anreger, besonders bevorzugt 40 bis 80 Gew.-% Klinkerersatzmaterial und 20 bis 60 Gew.-% Anreger, wobei die Werte auf die gesamte Menge an Bindemittel bezogen sind und sich die Anteile mit den restlichen Bindemittelkomponenten zu 100% addieren.

## Claims

1. Hydraulic binder based on supplementary cementitious material and reactive belite, containing x-Ca₂SiO₄ in an amount of > 30 % by weight and at least one X-ray amorphous phase in an amount of > 5 % by weight, as activator, wherein the activator is obtainable by hydrothermal treatment of a starting material, which contains sources for CaO and SiO₂, in an autoclave at a temperature of 100 to 300 °C and a residence time of 0.1 to 24 hours, and tempering the obtained intermediate product at 350 to 495 °C and a residence time of 0.01 to 600 min..

2. Binder according to claim 1, **characterised in that** it contains 5 to 95 % by weight supplementary cementitious material and 5 to 95 % by weight activator, preferably 30 to 85 % by weight supplementary cementitious material and 15 to 70 % by weight activator, particularly preferred 40 to 80 % by weight supplementary cementitious material and 20 to 60 % by weight activator, wherein the values are based on the total amount of binder and the proportions add up to 100 % with the rest of the binder components.

3. Binder according to one claim 1 or 2, **characterised in that** the supplementary cementitious material is selected from tempered clays, such as metakaolin and shale; V and W fly ash having a high glass content and/or a content of reactive phases; ground granulated blast furnace slags; artificial (pozzolanic and latent-hydraulic) glasses and mixtures thereof.

4. Binder according to one of claims 1 to 3, **characterised in that** admixtures and/or additives are contained.

5. Binder according to claim 4, **characterised in that** additives are contained that are selected from hydraulically non-active components, such as ground limestone / dolomite, precipitated CaCO₃, Mg(OH)₂, Ca(OH)₂, CaO, silica fumes and glass flour.

6. Binder according to claim 4 or 5, **characterised in that**, in total, additives in an amount ranging from 1 to 25 % by weight, preferably from 3 to 20 % by weight and yet more preferably from 6 to 15 % by weight are contained.

7. Binder according to one of claims 4 to 6, **characterised in that** admixtures are contained that are selected from setting accelerators, hardening accelerators, concrete water reducing agents, plasticizers, retarders and mixtures thereof.

8. Binder according to one of claims 1 to 7, **characterised in that** at least one additional hydraulic material, preferably Portland cement, is contained.

9. Binder according to claim 8, **characterised in that** from 1 to 70 % by weight, in particular from 5 to 40 % by weight and particularly preferred from 10 to 25 % by weight of additional hydraulic material is contained.

10. Method for activating latent-hydraulic and/or pozzolanic supplementary cementitious materials by adding reactive belite, comprising x-Ca₂SiO₄ in an amount of > 30 % by weight and at least one X-ray amorphous phase in an amount of > 5 % by weight, that is obtainable by hydrothermal treatment of a starting material, which contains sources for CaO and SiO₂, in an autoclave at a temperature of 100 to 300 °C and a residence time of 0.1 to 24 hours, and tempering the obtained intermediate product at 350 to 495 °C and a residence time of 0.01 to 600 min., to form a reactive belite containing activator.

11. Method according to claim 10, **characterised in that** the activator is ground together with the supplementary cementitious material.

12. Method for producing a binder according to one of claims 1 to 9, containing supplementary cementitious material and an activator, containing x-Ca₂SiO₄ in an amount of > 30 % by weight and at least one X-ray amorphous phase with a content of > 5 % by weight, wherein the activator is obtained by hydrothermal treatment of a starting material, which contains sources for CaO and SiO₂, in an autoclave at a temperature of 100 to 300 °C and a residence time of 0.1 to 24 hours, and tempering the obtained intermediate product at 350 to 495 °C and a residence time of 0.01 to 600 min., **characterised in that** the intermediate product is ground together with the supplementary cementitious material or a part thereof.

13. Building material, in particular concrete, mortar, plaster, screed or sealant, containing a binder according to one of claims 1 to 9, and at least one of aggregates, admixtures and additives.

14. Use of reactive belite containing x-Ca₂SiO₄ in an amount of > 30 % by weight and at least one X-ray amorphous phase with a content of > 5 % by weight, that is obtainable by hydrothermal treatment of a starting material, which contains sources for CaO and SiO₂, in an autoclave at a temperature of 100 to 300 °C and a resdinece time of 0.1 to 24 hours, and tempering the obtained intermediate product at 350 to 495 °C and a residence time of 0.01 to 600 min., to form an activator containing reactive belite, as an activator of latent-hydraulic and/or pozzolanic supplementary cementitious material in hydraulic binders.

15. Use according to claim 14, **characterised in that** the binder contains from 5 to 95 % by weight supplementary cementitious material and 5 to 95 % activator, preferably 30 to 85 % by weight supplementary cementitious material and 15 to 70 % by weight activator, particularly preferred 40 to 80 % by weight supplementary cementitious material and 20 to 60 % by weight activator, wherein the values are based on the total amount of binder and the proportions add up to 100 % with the rest of the binder components.

## Revendications

1. Liant hydraulique à base de matériau de substitution du clinker et de bélite réactive, contenant du x-Ca₂SiO₄ à une teneur > 30 % en poids et au moins une phase amorphe aux rayons X à une teneur > 5 % en poids, en tant qu'activateur, l'activateur pouvant être obtenu par traitement hydrothermique d'un matériau de base contenant des sources de CaO et de SiO₂ dans un autoclave à une température située dans la plage allant de 100 à 300 °C et pendant un temps de séjour situé dans la plage allant de 0,1 à 24 h, et par recuit du produit intermédiaire ainsi obtenu à une température située dans la plage allant de 350 à 495 °C et pendant un temps de séjour situé dans la plage allant de 0,01 à 600 min.

2. Liant selon la revendication 1, **caractérisé en ce qu'**il contient de 5 à 95 % en poids de matériau de substitution du clinker et de 5 à 95 % en poids d'activateur, de préférence de 30 à 85 % en poids de matériau de substitution du clinker et de 15 à 70 % en poids d'activateur, de façon particulièrement préférée de 40 à 80 % en poids de matériau de substitution du clinker et de 20 à 60 % en poids d'activateur, les valeurs se rapportant à la quantité totale de liant et les pourcentages totalisant 100 % avec les autres constituants du liant.

3. Liant selon la revendication 1 ou 2, **caractérisé en ce que** le matériau de substitution du clinker est choisi parmi les argiles recuites telles que le métakaolin et le schiste; les cendres volantes riches en acide silicique et les cendres volantes riches en calcaire qui présentent une forte proportion de verre et/ou une teneur élevée en phases réactives; les laitiers granulés de haut-fourneau; les verres artificiels (pouzzolaniques et à action hydraulique latente) et les mélanges de ceux-ci.

4. Liant selon l'une des revendications 1 à 3, **caractérisé en ce qu'**il contient des adjuvants et/ou des additifs.

5. Liant selon la revendication 4, **caractérisé en ce qu'**il contient des additifs choisis parmi les constituants sans action hydraulique tels que le calcaire / la dolomite broyé(e), le CaCO₃ précipité, le Mg(OH)₂, le Ca(OH)₂, le CaO, la microsilice et la poudre de verre.

6. Liant selon la revendication 4 ou 5, **caractérisé en ce que** les additifs sont présents au total en une quantité située dans la plage allant de 1 à 25 % en poids, de préférence de 3 à 20 % en poids et de préférence encore de 6 à 15 % en poids.

7. Liant selon l'une des revendications 4 à 6, **caractérisé en ce qu'**il contient des adjuvants choisis parmi les accélérateurs de prise, les accélérateurs de durcissement, les superplastifiants, les agents rhéologiques, les retardateurs et les mélanges de ceux-ci.

8. Liant selon l'une des revendications 1 à 7, **caractérisé en ce qu'**il contient au moins un matériau hydraulique supplémentaire, de préférence du ciment Portland.

9. Liant selon la revendication 8, **caractérisé en ce qu'**il contient de 1 à 70 % en poids, en particulier de 5 à 40 % en poids et de façon particulièrement préférée de 10 à 25 % en poids d'un matériau hydraulique supplémentaire.

10. Procédé d'activation de matériaux de substitution du clinker à action hydraulique latente et/ou pouzzolaniques par adjonction de bélite réactive, contenant du x-Ca₂SiO₄ à une teneur > 30 % en poids et au moins une phase amorphe aux rayons X à une teneur > 5 % en poids, pouvant être obtenu par traitement hydrothermique d'un matériau de base contenant des sources de CaO et de SiO₂ dans un autoclave à une température située dans la plage allant de 100 à 300 °C et pendant un temps de séjour situé dans la plage allant de 0,1 à 24 h, et par recuit du produit intermédiaire ainsi obtenu à une température située dans la plage allant de 350 à 495 °C et pendant un temps de séjour situé dans la plage allant de 0,01 à 600 min, à un activateur contenant de la bélite réactive.

11. Procédé selon la revendication 10, **caractérisé en ce que** l'activateur est broyé en même temps que le matériau de substitution du clinker.

12. Procédé de fabrication d'un liant selon l'une des revendications 1 à 9 contenant un matériau de substitution du clinker et un activateur, contenant du x-Ca₂SiO₄ à une teneur > 30 % en poids et au moins une phase amorphe aux rayons X à une teneur > 5 % en poids, l'activateur étant obtenu par traitement hydrothermique d'un matériau de base contenant des sources de CaO et de SiO₂ dans un autoclave à une température située dans la plage allant de 100 à 300 °C et pendant un temps de séjour situé dans la plage allant de 0,1 à 24 h, et par recuit du produit intermédiaire ainsi obtenu à une température située dans la plage allant de 350 à 495 °C et pendant un temps de séjour situé dans la plage allant de 0,01 à 600 min, **caractérisé en ce que** le produit intermédiaire est broyé en même temps que le matériau de substitution du clinker ou qu'une partie de celui-ci.

13. Matériau de construction, en particulier béton, mortier, enduit, chape ou matériau de jointoiement, contenant un liant selon l'une des revendications 1 à 9, et au moins un constituant choisi parmi les agrégats, les adjuvants et les additifs.

14. Utilisation de bélite réactive, contenant du x-Ca₂SiO₄ à une teneur > 30 % en poids et au moins une phase amorphe aux rayons X à une teneur > 5 % en poids, pouvant être obtenu par traitement hydrothermique d'un matériau de base contenant des sources de CaO et de SiO₂ dans un autoclave à une température située dans la plage allant de 100 à 300 °C et pendant un temps de séjour situé dans la plage allant de 0,1 à 24 h, et par recuit du produit intermédiaire ainsi obtenu à une température située dans la plage allant de 350 à 495 °C et pendant un temps de séjour situé dans la plage allant de 0,01 à 600 min, à un activateur contenant de la bélite réactive, en tant qu'activateur de matériaux de substitution du clinker à action hydraulique latente et/ou pouzzolaniques dans des liants hydrauliques.

15. Utilisation selon la revendication 14, **caractérisée en ce que** le liant contient de 5 à 95 % en poids de matériau de substitution du clinker et de 5 à 95 % en poids d'activateur, de préférence de 30 à 85 % en poids de matériau de substitution du clinker et de 15 à 70 % en poids d'activateur, de façon particulièrement préférée de 40 à 80 % en poids de matériau de substitution du clinker et de 20 à 60 % en poids d'activateur, les valeurs se rapportant à la quantité totale de liant et les pourcentages totalisant 100 % avec les autres constituants du liant.
